# EUROPÄISCHE PATENTSCHRIFT

(11) **EP 4 139 640 B1**
(45) Veröffentlichungstag und Bekanntmachung des Hinweises auf die Patenterteilung: **03.01.2024**
(21) Anmeldenummer: 21700382.1
(22) Anmeldetag: 08.01.2021
(51) Int. Cl.: G01G 21/28, G01G 23/00

(54) **GRAVIMETRISCHE MESSVORRICHTUNG**
GRAVIMETRIC MEASURING DEVICE
DISPOSITIF DE MESURE GRAVIMÉTRIQUE

(30) Priorität: 22.04.2020 DE 102020110865
(43) Veröffentlichungstag der Anmeldung: 01.03.2023
(73) Patentinhaber: Sartorius Lab Instruments GmbH & Co. KG, 37079 Göttingen (DE)
(72) Erfinder: STÄNDER, Malte, 37079 Göttingen (DE)
(74) Vertreter: Novagraaf International SA
(86) Internationale Anmeldenummer: PCT/EP2021/050220
(87) Internationale Veröffentlichungsnummer: WO 2021/213704

(56) Entgegenhaltungen:
- EP-A1- 2 574 900
- DE-A1-102005 055 753
- JP-A- 2005 227 212

## Beschreibung

### Gebiet der Erfindung

Die Erfindung betrifft ein gravimetrisches Messvorrichtung-System.

### Stand der Technik

Präzisionswaagen mit unterschiedlichen Funktionsweisen sind allgemein bekannt. Bekannt sind beispielsweise Präzisionswaagen mit elektromagnetischer Kraftkompensation, Dehnungsmessstreifen, Schwingsaiten, kapazitiven Sensoren oder piezoresistiven Sensoren. Sie umfassen - wie andere Waagentypen auch - einen Wägegutträger, auf dem das Wägegut zum Wiegen positioniert wird. Üblicherweise, jedoch nicht zwingend, ist der Wägegutträger in einem durch eine Wägeraumwandung von der Umgebung abgeschirmten Wägeraum angeordnet, wobei sich die Wägeraumwandung aus einem Wägeraumboden, einem Wägeraumdeckel, Wägeraumseitenwänden sowie einer Vorder- und einer Rückwand zusammensetzt. Meist sind der Deckel, die Seitenwände und/oder die Vorderwand als bewegbare Windschutz-Elemente ausgebildet oder sie enthalten verschließbare Zugangsöffnungen, um ein Positionieren des Wägeguts im Wägeraum zu ermöglichen. Der Wägegutträger ist mit einem Lastaufnehmer verbunden, der für gewöhnlich den Wägeraumboden durchsetzt. Der Lastaufnehmer ist Teil eines typischerweise komplexen Wägesystems, also eines typischerweise komplexen Hebelwerks, das neben dem eingangsseitigen Lastaufnehmer eine ausgangsseitige Sensorik aufweist. Die konkrete Sensorik spielt im Kontext der vorliegenden Erfindung keine Rolle. Das Wägesystem ist zur Abschirmung gegenüber Umwelteinflüssen in einem dem Wägeraum benachbarten Wägesystemraum angeordnet.

Weiter enthalten derartige Präzisionswaagen stets eine Steuereinrichtung, die insbesondere die Wägesensorik ansteuert.

Die EP 3 074 736 B1 offenbart eine Präzisionswaage mit einem Waagengrundkörper und einem Aufsatz. Der Lastaufnehmer des Wägesystems durchsetzt die Waagengrundkörperwandung in dem Bereich, der den Wägeraumboden bildet. Der Aufsatz, der auf dem Wägeraumboden aufgesetzt ist, weist ebenfalls eine Durchtrittsöffnung für den Lastaufnehmer auf. Zudem ist der Aufsatz reversibel auf dem Wägeraumboden (und somit an der Waagengrundkörperwandung) fixierbar, um ihn zur Reinigung einfach demontieren und anschließend wieder montieren zu können.

Nachteilig an dieser Waage ist, dass sie im Gegensatz zu moderneren Waagen über keine zusätzlichen Hilfseinrichtungen, beispielsweise eine Kühlvorrichtung, eine Windschutzsteuerung, eine Hebevorrichtung innerhalb des Wägeraums, eine Beleuchtungseinrichtung oder Ähnliches verfügt. Die bekannte Waage bietet auch keine Möglichkeit einer nachträglichen, bedarfsgerecht individualisierten Konfektionierung.

Die JP 2005 227212 A offenbart einen Waagengrundkörper mit Wägesystem und einen damit koppelbaren Windschutz, in dessen Deckel ein Solar-Panel integriert ist, mittels dessen ein Akku der Wägeelektronik im Waagengrundkörper aufladbar ist. Zur Herstellung eines elektrischen Kontaktes zwischen dem Solar-Panel und dem Akku sind am Boden des Aufsatzes bzw. an der Oberseite des Waagengrundkörpers korrespondierende elektrische Schnittstellen vom Stecker/Buchse-Typ vorgesehen. Der Schnittstellen des Grundkörpers sind exakt an Anzahl und Form der Schnittstellen des Aufsatzes angepasst. Daher lässt sich der Aufsatz durch einen identischen Aufsatz ersetzen. Der Benutzer hat die Wahl, die Waage mit oder ohne Aufsatz, d.h. hier Windschutz, zu verwenden.

Aus dem Stand der Technik sind moderne Waagen mit zusätzlichen Hilfseinrichtungen wie den oben genannten bekannt. Nachteilig ist hier allerdings, dass die Waagen bereits bei ihrer Herstellung entsprechend dem aktuellen Bedarf eines Kunden mit solch zusätzlichen Hilfseinrichtungen ausgerüstet werden müssen. Eine bedarfsgerechte Nachrüstung ist nicht ohne weiteres möglich.

Aus der EP 1 195 584 A1 ist eine Waage mit bedarfsweise installierbaren Hilfseinrichtungen bekannt, die mittels einer schienenartigen Haltevorrichtung an der Rückwand des Wägeraums reversibel fixiert werden können. Um im konkreten Einzelfall benötigte Hilfseinrichtungen in der jeweils benötigten Position festlegen zu können, weist die schienenartige Haltevorrichtung unterschiedliche mechanische Schnittstellen in Form von Ausnehmungen auf, in die die Hilfseinrichtungen bedarfsweise einsetzbar sind. Ein solches System mit austauschbaren Hilfseinrichtungen unterschiedlicher Funktionen ist insbesondere in Laborumgebungen vorteilhaft, in denen mit ein und derselben Waage unterschiedliche Wägeaufgaben durchgeführt werden müssen. Die Waage kann dann vom Benutzer selbst entsprechend seinem konkreten Bedarf im Einzelfall konfektioniert werden. Selbst in Fällen, in denen die mechanischen Schnittstellen so gestaltet sind, dass ein Austausch der Hilfseinrichtungen durch den Benutzer unmöglich ist, sind solche Systeme auch herstellerseitig vorteilhaft. Aufbauend auf demselben Waagengrundkörper können durch Wahl der in die Aufnahmen eingesetzten Hilfseinrichtungen Waagen für unterschiedliche Wägeaufgaben vorkonfektioniert werden. Die Anzahl herzustellender Spezialteile verringert sich drastisch, was zu einer deutlichen Kosteneinsparung führt. Allerdings ragt die Haltevorrichtung platzraubend und verschmutzungsanfällig in den Wägeraum hinein.

Aus der EP 2 574 900 A1 ist ein Messgerät zur gravimetrischen Feuchtigkeitsbestimmung bekannt, bei dem ein deckelartiger Aufsatz mit integrierter Heizvorrichtung schwenkbar am Waagengrundkörper fixiert ist, wobei der Waagengrundkörper und der Aufsatz über korrespondierende elektrische Schnittstellen zur Energieversorgung der Heizvorrichtung verfügen. In einer Messstellung, in der der Aufsatz gemeinsam mit dem Waagengrundkörper einen Wägeraum umschließt, stehen die beiden Schnittstellen miteinander in Kontakt. In einer dem gegenüber verschwenkten Offenstellung, in der der Wägeraum von außen zugänglich ist, stehen die beiden Schnittstellen außer Kontakt zueinander.

Die DE 10 2014 101 561 A1 offenbart eine Waage, deren Wägeraumwandung mit einem Klimamodul ausgestattet ist, welches über eine Funkverbindung mit einer separaten Auswerteeinheit in Kontakt steht, die ihrerseits über ein Kabel mit dem in der Waage enthaltenen Wägesystem verbunden ist.

Aus der DE 10 2017 221 139 A1 ist eine Waage bekannt, auf welche eine Küchenmaschine aufsetzbar ist. Die Oberfläche des Waagengrundkörpers weist dabei eine Kommunikationsschnittstelle in Form eines Steckers auf, der beim Aufsetzen der Küchenmaschine in eine entsprechende buchsenartige Kommunikationsschnittstelle der Küchenmaschine eingreift. Auf diese Weise können Daten zwischen der Küchenmaschine und der Waage ausgetauscht werden.

Aus der EP 2 088 406 A1 ist eine Waage mit abnehmbaren Windschutz bekannt. Der Windschutz ist dabei als zusammenhängende Baueinheit ausgestaltet, die mittels einer bajonettartigen mechanischen Schnittstelle am Waagengrundkörper fixierbar ist.

Die DE 10 2019 102 801 A1 schließlich offenbart eine Waage mit einem Wägeraum, der eine rasterartige Wägeraum-Rückwand aufweist. Die Ausnehmungen der einzelnen Raster können wahlweise mit Funktionsmodulen oder funktionslosen Blenden verschlossen werden. Das Raster der Wägeraum-Rückwand ist mit Schnittstellen versehen, die mit korrespondieren Schnittstellen der Funktionsmodule korrespondieren.

### Aufgabenstellung

Es ist die Aufgabe der vorliegenden Erfindung, eine gravimetrische Messvorrichtung derart zu gestalten, dass eine bedarfsgerecht individualisierte Konfektionierung in platzsparenderer und weniger verschmutzungsanfälligerer bzw. leichter reinigbarer Weise ermöglicht wird.

### Darlegung der Erfindung

Diese Aufgabe wird mit den Merkmalen des Oberbegriffs von Anspruch 1 gelöst durch ein gravimetrisches Messvorrichtungs-System, umfassend einen Waagengrundkörper, ein Wägesystem und einer Mehrzahl verschiedener Aufsätzen, zum alternativen Aufbau unterschiedlicher gravimetrischer Messvorrichtungen, die jeweils den Waagengrundkörper, das Wägesystem und einen der Aufsätze umfassen, wobei dieser Aufsatz an einer Waagengrundkörperwandung des Waagengrundkörpers reversibel fixiert ist und das Wägesystem einen die Waagengrundkörperwandung und den Aufsatz durchsetzenden Lastaufnehmer aufweist, und wobei an der Waagengrundkörperwandung eine Mehrzahl von mit einer Waagenelektronik gekoppelten optischen, magnetischen, taktilen, funktechnischen, thermischen, elektrischen und/oder elektronischen Schnittstellen angeordnet sind, von denen wenigstens eine mit einer korrespondierenden Schnittstelle des Aufsatzes zur Ausbildung einer optischen, magnetischen, taktilen, funktechnischen, thermischen, elektrischen bzw. elektronischen Verbindung zwischen dem Aufsatz und der Waagenelektronik verbunden ist, während andere nicht von korrespondierenden Schnittstelle des Aufsatzes kontaktiert sind.

Bevorzugte Ausführungsformen sind Gegenstand der abhängigen Ansprüche.

Erfindungsgemäß ist vorgesehen, die Waagengrundkörperwandung einer Waage mit einer Mehrzahl an Schnittstellen zu versehen, die mit einer Waagenelektronik gekoppelt sind, und verschiedene, (von Hersteller und/oder Benutzer) austauschbare Aufsätze mit aktiven Hilfseinrichtungen, d. h. sogenannte aktive Aufsätze, bereitzustellen, die jeweils eine oder mehrere, für ihre jeweilige Funktion erforderlichen, korrespondierenden Schnittstellen aufweisen. Damit kann die jeweils bedarfsgerechte Konfektionierung der Waage durch einfachen Austausch des Aufsatzes erfolgen.

Die Waagenelektronik, mit der die Schnittstellen gekoppelt sind, umfasst eine Steuereinrichtung zur Steuerung des Systembetriebs, die beispielsweise eine Speichereinheit, eine Identifikationseinheit und/oder eine Kühleinheit umfassen kann. Die Schnittstellen an der Waagengrundkörperwandung können dort in jedem denkbaren Bereich angeordnet sein. Besonders günstig ist es, wenn sie in dem Bereich, der den Wägeraumboden oder die Wägeraumrückwand bildet, angeordnet sind. Dabei ist es möglich, aber nicht erforderlich, dass sämtliche Schnittstellen im gleichen Bereich der Waagengrundkörperwandung angeordnet sind. Die Schnittstellen an der Waagengrundkörperwandung können optisch, magnetisch, taktil, funktechnisch, thermisch, elektrisch und/oder elektronisch sein, d. h. sie können in Zusammenwirkung mit einer korrespondierenden Schnittstelle eine optische, magnetische, taktile, funktechnische, thermische, elektrische und/oder elektronische Verbindung ausbilden. Die korrespondierenden Schnittstellen sind am Aufsatz angeordnet, sodass dieser im an der Waagengrundkörperwandung montierten Zustand mit der Waagenelektronik verbunden ist. Die Kontaktierung der Schnittstellen an der Waagengrundkörperwandung mit den korrespondierenden Schnittstellen am Aufsatz erfolgt vorzugsweise automatisch beim Befestigen des Aufsatzes am Waagengrundkörper. Dabei ist es nicht erforderlich, dass sämtliche Schnittstellen an der Waagengrundkörperwandung von korrespondierenden Schnittstellen am Aufsatz unter Ausbildung einer Verbindung kontaktiert werden. Vielmehr genügt es, wenn der Aufsatz mindestens eine zu den Schnittstellen der Waagengrundkörperwandung korrespondierende Schnittstelle aufweist, die bei der Installation des Aufsatzes unter Ausbildung einer Verbindung kontaktiert wird.

Da der Aufsatz reversibel an der Waagengrundkörperwandung fixierbar ist, ist er leicht, d. h. ohne großen Aufwand, gegen andere Aufsätze austauschbar, die derart gestaltet sind, dass sie ebenfalls an der Waagengrundkörperwandung reversibel fixierbar sind. Durch die Bereitstellung einer Mehrzahl an Schnittstellen an der Waagengrundkörperwandung können verschiedene aktive Aufsätze mit unterschiedlichen Funktionen und unterschiedlichen korrespondierenden Schnittstellen an der Waagengrundkörperwandung fixiert werden. Auf diese Weise lassen sich mittels verschiedener Aufsätze mit unterschiedlichen Funktionen unterschiedliche Waagen für unterschiedliche Anwendungen konfektionieren. Die gravimetrische Messvorrichtung kann also durch den Wechsel des Aufsatzes schnell und unkompliziert mit anderen Funktionen aus- bzw. nachgerüstet werden. Rein beispielhaft seien hier ein motorischer Innenwindschutz, ein Dichtebestimmungsset mit integriertem Temperatursensor, ein Pipetten-Kalibrierset mit integriertem Temperatursensor, Luftdrucksensor und Luftfeuchtesensor sowie einer Verdunstungsfalle mit einem motorisch angetriebenen Verschluss, ein RFID-Reader, ein Lastwechsler für Massekomparatoranwendungen, ein E-Feldsensor, ein Magnetfeldsensor eine motorische Hebevorrichtung oder eine Dosiervorrichtung genannt. D. h. beim Bedarf der Aus- oder Nachrüstung einer erfindungsgemäßen Waage mit neuen Funktionen kann der Waagengrundkörper beibehalten werden, während lediglich der Aufsatz ausgetauscht werden muss, da der Waagengrundkörper derart gestaltet ist, dass er in Kombination mit verschiedenen Aufsätzen unterschiedlichster Funktionen eine funktionierende gravimetrische Messvorrichtung bildet. Die Gestaltung des Waagengrundkörpers mit mehreren Schnittstellen an der Waagengrundkörperwandung ermöglicht es, auch neue, zukünftige Funktionen in Form neuer Aufsätze bereitzustellen, die mit dem Waagengrundkörper kompatibel sind. Somit ergibt sich eine gravimetrische Messvorrichtung mit einer besonderen Flexibilität im Hinblick auf die Konfektionierung der Waage. Gleichzeitig reduziert sich durch die Gestaltung des Waagengrundkörpers mit mehreren Schnittstellen an der Waagengrundkörperwandung die Anzahl herzustellender Spezialteile auf die Aufsätze, was bei der Produktion zu einer deutlichen Kosteneinsparung führt und sich als besonders nachhaltig erweist.

Bevorzugt ist wenigstens eine Schnittstelle an der Waagengrundkörperwandung als Stecker oder als Buchse und die korrespondierende Schnittstelle des Aufsatzes entsprechend als Buchse oder als Stecker ausgebildet. Der Aufsatz und die Waagengrundkörperwandung können also über eine Steckverbindung miteinander verbindbar sein, bei der der an der Waagengrundkörperwandung oder am Aufsatz angeordnete Stecker unter Ausbildung einer Verbindung in die entsprechend am Aufsatz oder an der Waagengrundkörperwandung angeordnete Buchse steckbar ist. Die Steckverbindung stellt eine einfach zu realisierende und leicht handzuhabende Möglichkeit dar, um den Aufsatz mit dem Waagengrundkörper und mit der Waagenelektronik zu verbinden.

Zusätzlich oder alternativ kann wenigstens eine Schnittstelle an der Waagengrundkörperwandung ebenso wie die korrespondierende Schnittstelle des Aufsatzes als Kontaktplatte ausgebildet sein, die bei Ausbildung einer Verbindung mit ihren Flächen aneinander liegen. Auch diese Gestaltung einer Schnittstelle ist bautechnisch leicht umzusetzen und bietet eine einfache Möglichkeit, den Aufsatz unkompliziert und ohne großen Aufwand mit dem Waagengrundkörper und mit der Waagenelektronik zu verbinden. Bei der Installation eines Aufsatzes mit einer als Kontaktplatte ausgebildeten Schnittstelle erfolgt die Kontaktierung mit der korrespondierenden, an der Waagengrundkörperwandung angeordneten Schnittstelle automatisch dadurch, dass die beiden Kontaktplatten aneinander liegen, d. h. dass sich ihre einander zugewandten, plattenförmigen Flächen berühren. Die Ausbildung von Schnittstellen als Kontaktplatten eignet sich insbesondere, aber nicht ausschließlich, für die Ausbildung einer thermischen Schnittstelle zwischen dem Aufsatz und der Waagenelektronik.

Bei einer bevorzugten Weiterbildung ist vorgesehen, dass die als Kontaktplatte ausgebildete Schnittstelle an der Waagengrundkörperwandung und die als Kontaktplatte ausgebildete Schnittstelle am Aufsatz bei Ausbildung einer Verbindung gegeneinander federbelastet sind. Durch die Federvorspannung der beiden Kontaktplatten gegeneinander ist sichergestellt, dass es bei der Installation des Aufsatzes zu einer Kontaktierung der beiden Kontaktplatten kommt. Dabei ist die Kontaktfläche der beiden Kontaktplatten maximiert.

Darüber hinaus kann wenigstens eine Schnittstelle an der Waagengrundkörperwandung als eine Informationssende- und/oder Informationsempfangsschnittstelle ausgebildet sein. Die Waagenelektronik kann also über die Schnittstelle an der Waagengrundkörperwandung Informationen senden und/oder empfangen. Verfügt der Aufsatz beispielsweise über eine Identifikationseinheit, kann die Information über die Identität des Aufsatzes vom Aufsatz über die als Informationsempfangsschnittstelle ausgebildete Schnittstelle an der Waagengrundkörperwandung an die Waagenelektronik übermittelt werden. Verfügt der Aufsatz beispielsweise über einen motorischen Innenwindschutz, kann der Befehl zum Öffnen oder Schließen des Innenwindschutzes von der Waagenelektronik über die als Informationssendeschnittstelle ausgebildete Schnittstelle an der Waagengrundkörperwandung an den Aufsatz übermittelt werden. Interessant ist diese Ausführungsform beispielsweise auch für den Fall, dass der Aufsatz als ein Pipettenkalibriermodul ausgebildet ist, das über einen motorisch angetriebenen Verschluss sowie einen Bewegungs- bzw. Näherungssensor verfügt, dessen Erfassungsraum den Bereich um den Verschluss abdeckt. So kann die vom Sensor registrierte Information über ein Annähern oder Entfernen eines Gegenstandes, z. B. einer Pipettenspitze, an den bzw. aus dem Bereich um den Verschluss vom Aufsatz über die als Informationsempfangsschnittstelle ausgebildete Schnittstelle an der Waagengrundkörperwandung an die Waagenelektronik übermittelt werden. Daraufhin kann von der Waagenelektronik ein Befehl zum Öffnen oder Schließen des Pipettenkalibriermodul-Verschlusses über die als Informationssendeschnittstelle ausgebildete Schnittstelle an der Waagengrundkörperwandung an den Aufsatz übermittelt werden.

Weiter bevorzugt ist wenigstens eine Schnittstelle an der Waagengrundkörperwandung als eine Energieversorgungsschnittstelle ausgebildet. Dies ist dann notwendig, wenn der Aufsatz derart ausgebildet ist, dass er zur vorgesehenen Funktion Energie benötigt. Die benötigte Energie kann der Aufsatz dann über die Energieversorgungsschnittstelle an der Waagengrundkörperwandung, die der Aufsatz unter Ausbildung einer Energie leitenden Verbindung kontaktiert, aus dem Energieversorgungssystem des Waagengrundkörpers beziehen.

Günstigerweise ist der Aufsatz mittels einer lösbaren Rastverbindung reversibel an der Waagengrundkörperwandung fixiert. Durch den Einsatz einer lösbaren Rastverbindung zur Befestigung des Aufsatzes an der Waagengrundkörperwandung ist der Aufsatz einfach zu montieren und zu demontieren. Bei einer Verrastung des Aufsatzes an der Waagengrundkörperwandung ist der Aufsatz zuverlässig an der Waagengrundkörperwandung und somit am Waagengrundkörper gehalten. Die Ausgestaltung der Rastverbindung als lösbar ermöglicht zudem eine einfache, werkzeuglose Demontage des Aufsatzes vom Waagengrundkörper.

Neben der gravimetrischen Messvorrichtung stellen auch der Waagengrundkörper ohne Aufsatz und die Aufsätze selbst interessante merkantile Einheiten dar.

Dabei kann ein solcher Aufsatz der Erweiterung einer gravimetrischen Messvorrichtung um eine neue Funktion dienen. Ein erfindungsgemäßer Aufsatz für eine erfindungsgemäße gravimetrische Messvorrichtung umfasst Befestigungsmittel zur reversiblen Fixierung an einer Waagengrundkörperwandung und zeichnet sich insbesondere durch mindestens eine optische, magnetische, taktile, funktechnische, thermische, elektrische und/oder elektronische Schnittstelle aus. Mittels dieser Schnittstelle kann der Aufsatz zur Ausbildung einer optischen, magnetischen, taktilen, funktechnischen, thermischen, elektrischen und/oder elektronischen Verbindung zwischen dem Aufsatz und der Waagenelektronik mit einer korrespondierenden Schnittstelle an der Waagengrundkörperwandung eines Waagengrundkörpers verbunden werden.

Ein Waagengrundkörper für eine erfindungsgemäße Messvorrichtung wiederum umfasst eine Waagengrundkörperwandung sowie ein Wägesystem mit einem die Waagengrundkörperwandung durchsetzenden Lastaufnehmer und zeichnet sich insbesondere dadurch aus, dass an der Waagengrundkörperwandung eine Mehrzahl von mit einer Waagenelektronik gekoppelten optischen, magnetischen, taktilen, funktechnischen, thermischen, elektrischen und/oder elektronischen Schnittstellen angeordnet sind.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines erfindungsgemäßen Waagengrundkörpers;
- Figur 2:: eine schematische Darstellung einer erfindungsgemäßen gravimetrischen Messvorrichtung, umfassend den Waagengrundkörper aus Figur 1 sowie einen ersten Aufsatz und einen Windschutz;
- Figur 3:: eine schematische Darstellung eines als automatischen Innenwindschutz ausgebildeten, zweiten Aufsatzes;
- Figur 4:: eine schematische Darstellung einer erfindungsgemäßen gravimetrischen Messvorrichtung, umfassend den Waagengrundkörper aus Figur 1 sowie den Aufsatz aus Figur 3 und einen Windschutz;
- Figur 5:: eine schematische Darstellung eines als automatisches Pipettenkalibriermodul ausgebildeten, dritten Aufsatzes;
- Figur 6:: eine schematische Darstellung einer erfindungsgemäßen gravimetrischen Messvorrichtung, umfassend den Waagengrundkörper aus Figur 1 sowie den Aufsatz aus Figur 5;
- Figur 7:: eine schematische Darstellung eines als RFID-Reader ausgebildeten, vierten Aufsatzes sowie
- Figur 8:: eine schematische Darstellung einer erfindungsgemäßen gravimetrischen Messvorrichtung, umfassend den Waagengrundkörper aus Figur 1 sowie den Aufsatz aus Figur 7 und einen Windschutz.

### Beschreibung bevorzugter Ausführungsformen

Gleiche Bezugszeichen in den Figuren deuten auf gleiche oder analoge Elemente hin.

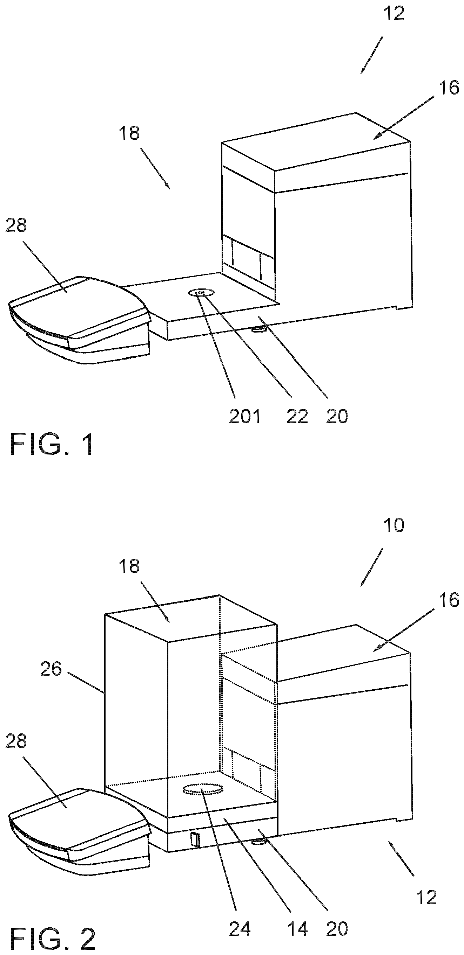

Figur 1 zeigt eine schematische Darstellung einer erfindungsgemäßen gravimetrischen Messvorrichtung ohne Aufsatz, d. h. eines erfindungsgemäßen Waagengrundkörpers 12. Der Waagengrundkörper 12 umfasst im Wesentlichen einen Wägesystemraum 16, in dem das Wägesystem angeordnet ist, einen Wägeraum 18 und eine Waagenelektronik in Form einer Elektronikeinheit 28. Bei der gezeigten Ausführungsform umfasst die Elektronikeinheit 28 eine großformatige Anzeige und eine Eingabeeinrichtung. Sie kann zusätzlich eine Steuereinrichtung enthalten. Diese kann zwar auch an anderer Stelle des Waagengrundkörpers 12 angeordnet sein. Es wird jedoch als günstig angesehen, wenn die Steuereinrichtung thermisch isoliert vom Wägeraum 18 sowie vom Wägesystemraum 16 angeordnet ist. Der konkrete Aufbau des Wägesystems spielt im Kontext der vorliegenden Erfindung keine Rolle. Es umfasst aber in jedem Fall einen Lastaufnehmer 22, der die Waagengrundkörperwandung 20 durchsetzt. Im gezeigten Ausführungsbeispiel durchsetzt der Lastaufnehmer 22 die Waagengrundkörperwandung 20 in dem Bereich, der den Wägeraumboden des an den Wägesystemraum 16 angrenzenden Wägeraums 18 bildet. Darüber hinaus sind in dem Bereich der Waagengrundkörperwandung 20, der den Wägeraumboden bildet, eine Mehrzahl an optischen, magnetischen, taktilen, funktechnischen, thermischen, elektrischen und/oder elektronischen Schnittstellen 201 angeordnet, die mit der Elektronikeinheit 28 gekoppelt sind. Diese Schnittstellen 201 könnten stattdessen auch in einem anderen Bereich der Waagengrundkörperwandung 20 angeordnet sein. Insbesondere, aber nicht ausschließlich, stellt der Bereich der Waagengrundkörperwandung 20, der die Wägeraumrückwand bildet, eine interessante Alternative für die Anordnung der Schnittstellen 201 dar.

Figur 2 zeigt eine schematische Darstellung einer erfindungsgemäßen gravimetrischen Messvorrichtung 10, umfassend den Waagengrundkörper 12 aus Figur 1 sowie einen ersten Aufsatz 14. Bei der gezeigten Ausführungsform ist der Wägeraum 18 durch eine Wägeraumwandung von der Umgebung abgeschirmt. Die Wägeraumwandung setzt sich zusammen aus einem motorischen Windschutz 26, der einen Wägeraumdeckel, Wägeraumseitenwände, eine Vorder- und eine Rückwand bildet, sowie dem Aufsatz 14. An dem freien Ende des Lastaufnehmers 22, der sowohl die Waagengrundkörperwandung 20 in dem Bereich, der den Wägeraumboden bildet, als auch den Aufsatz 14 durchsetzt, ist ein Wägegutträger 24 angeordnet, auf dem das Wägegut zum Wiegen positioniert wird. Der Aufsatz 14 ist reversibel an der Waagengrundkörperwandung 20, genauer am Wägeraumboden, fixierbar. Außer einer mechanischen Schnittstelle zur Fixierung am Waagengrundkörper 12 weist der Aufsatz 14 mindestens eine optische, magnetische, taktile, funktechnische, thermische, elektrische und/oder elektronische Schnittstelle auf (beides nicht eingezeichnet), die eine der Schnittstellen 201 an der Waagengrundkörperwandung 20 unter Ausbildung einer Verbindung kontaktiert. Dies kann beispielsweise eine als Energieversorgungsschnittstelle ausgebildete, elektrische oder elektronische Schnittstelle sein, über die der motorische Windschutz 26 und/oder eine am Aufsatz 14 angeordnete Beleuchtungseinrichtung mit Energie versorgt werden.

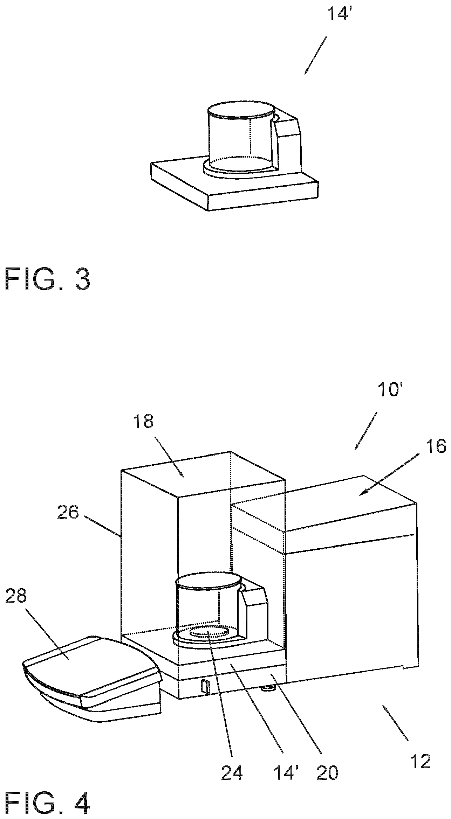

Figur 3 zeigt eine schematische Darstellung eines als automatischen Innenwindschutz ausgebildeten, zweiten Aufsatzes 14`. Der Aufsatz 14` weist Befestigungsmittel zur reversiblen Fixierung an einer Waagengrundkörperwandung 20, insbesondere an einem Wägeraumboden, eines erfindungsgemäßen Waagengrundkörpers 12 sowie mindestens eine Schnittstelle auf (beides nicht eingezeichnet), die bei Installation des Aufsatzes 14' an einem Waagengrundkörper 12 mit einer entsprechenden Schnittstelle 201 an dessen Waagengrundkörperwandung 20 korrespondiert. Insbesondere kann der Aufsatz 14' einen Motor zum Antrieb des automatischen Innenwindschutzes, einen Bewegungssensor zur Detektion einer Annäherung oder Entfernung aus dem Erfassungsraum des Sensors, eine als Energieversorgungsschnittstelle ausgebildete, elektrische oder elektronische Schnittstelle und eine als Informationssende- und Informationsempfangsschnittstelle ausgebildete, elektrische oder elektronische Schnittstelle umfassen.

Figur 4 zeigt eine schematische Darstellung einer erfindungsgemäßen gravimetrischen Messvorrichtung 10', umfassend den Waagengrundkörper 12 aus Figur 1 sowie den Aufsatz 14' aus Figur 3 und einen Windschutz 26. Die mindestens eine Schnittstelle am Aufsatz 14' ist mit einer korrespondierenden Schnittstelle 201 am Wägeraumboden 20 unter Ausbildung einer Kontaktierung verbunden. Dadurch kann die vom Bewegungssensor registrierte Information über ein Annähern oder Entfernen eines Gegenstandes an den bzw. aus dem Erfassungsraum des Sensors vom Aufsatz 14' über die als Informationsempfangsschnittstelle ausgebildete Schnittstelle, die an der Waagengrundkörperwandung angeordnet ist, an die Waagenelektronik übermittelt werden. Daraufhin kann von der Waagenelektronik ein Befehl zum Öffnen oder Schließen des automatischen Innenwindschutzes über die als Informationssendeschnittstelle ausgebildete Schnittstelle, die an der Waagengrundkörperwandung angeordnet ist, an den Aufsatz übermittelt werden, wobei der automatische Innenwindschutz 14' über die Energieversorgungsschnittstelle an der Waagengrundkörperwandung 20 Energie aus dem Energieversorgungssystem des Waagengrundkörpers 12 beziehen kann, über die beispielsweise der Motor des Aufsatzes 14' mit Energie versorgt wird. So kann der automatische Innenwindschutz 14' bei Annäherung eines Gegenstandes motorisch geöffnet bzw. bei Entfernen des Gegenstandes wieder verschlossen werden, wobei die Steuerung über die Elektronikeinheit 28 erfolgt.

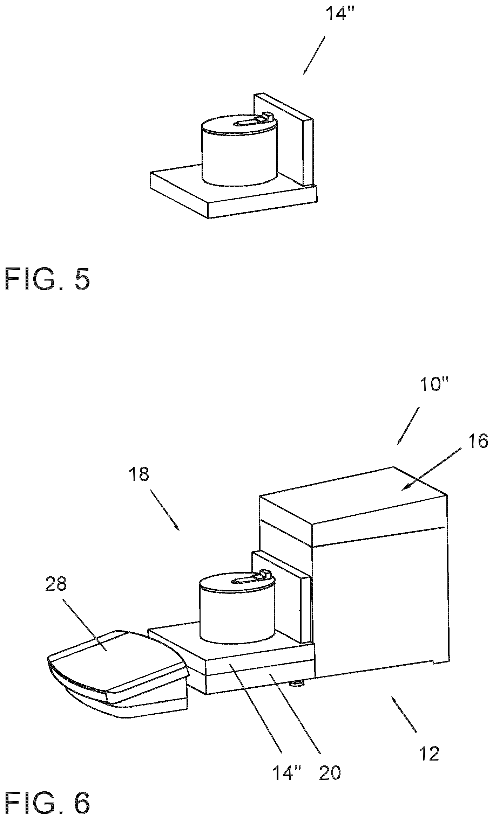

Figur 5 zeigt eine schematische Darstellung eines als automatisches Pipettenkalibriermodul ausgebildeten, dritten Aufsatzes 14". Dieser Aufsatz 14" weist ebenfalls Befestigungsmittel zur reversiblen Fixierung an einer Waagengrundkörperwandung 20 eines erfindungsgemäßen Waagengrundkörpers 12 sowie mindestens eine Schnittstelle auf (beides nicht eingezeichnet), die bei Installation des Aufsatzes 14" an einem Waagengrundkörper 12 mit einer entsprechenden Schnittstelle 201 an dessen Waagengrundkörperwandung 20 korrespondiert. Dieser Aufsatz 14" kann insbesondere eine thermische Schnittstelle aufweisen.

Figur 6 zeigt eine schematische Darstellung einer erfindungsgemäßen gravimetrischen Messvorrichtung 10", umfassend den Waagengrundkörper 12 aus Figur 1 sowie den Aufsatz 14" aus Figur 5. Die mindestens eine Schnittstelle am Aufsatz 14" ist mit einer korrespondierenden Schnittstelle 201 an der Waagengrundkörperwandung 20 unter Ausbildung einer Kontaktierung verbunden. Dadurch kann das Pipettenkalibriermodul 14" über die thermische Schnittstelle 201 an der Waagengrundkörperwandung 20 von der Elektronikeinheit 28 angesteuert werden und die Temperatur des Pipettenkalibriermoduls 14" kann konstant gehalten und bedarfsweise gekühlt oder erwärmt werden.

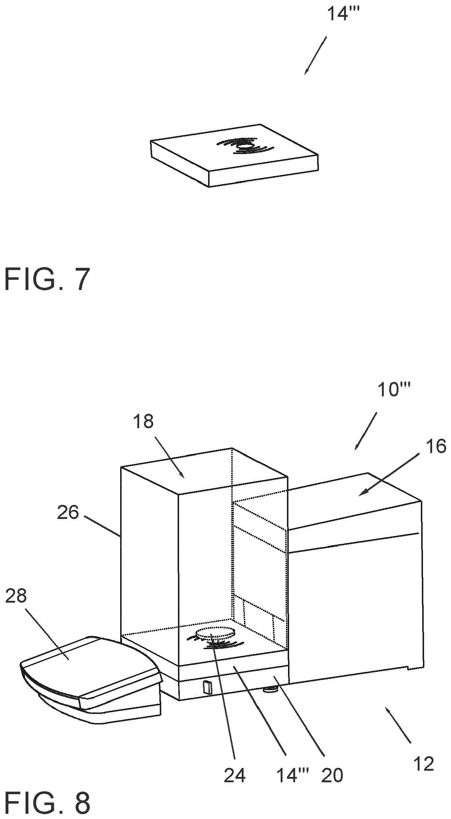

Figur 7 zeigt eine schematische Darstellung eines als RFID-Reader ausgebildeten, vierten Aufsatzes 14‴. Zur reversiblen Fixierung an einer Waagengrundkörperwandung 20 eines erfindungsgemäßen Waagengrundkörpers 12 weist auch dieser Aufsatz 14‴ Befestigungsmittel auf (nicht eingezeichnet). Ferner weist der Aufsatz 14‴ mindestens eine Schnittstelle auf (ebenfalls nicht eingezeichnet), die bei Installation des Aufsatzes 14‴ an einem Waagengrundkörper 12 mit einer entsprechenden Schnittstelle 201 an dessen Waagengrundkörperwandung 20 korrespondiert. Insbesondere kann der Aufsatz 14‴ eine als Informationssendeschnittstelle ausgebildete, funktechnische Schnittstelle aufweisen.

Figur 8 zeigt eine schematische Darstellung einer erfindungsgemäßen gravimetrischen Messvorrichtung 10‴, umfassend den Waagengrundkörper 12 aus Figur 1 sowie den Aufsatz 14‴ aus Figur 7 und einen Windschutz 26. Die mindestens eine Schnittstelle am Aufsatz 14‴ ist mit einer korrespondierenden, als Informationsempfangsschnittstelle ausgebildeten, funktechnischen Schnittstelle 201 an der Waagengrundkörperwandung 20 unter Ausbildung einer Kontaktierung verbunden. Dadurch können beispielsweise Informationen über die Identität des Aufsatzes 14‴, Informationen über das Wägegut, beispielsweise eine Chargennummer, oder Ähnliches vom Aufsatz an die Elektronikeinheit 28 übermittelt werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10, 10', 10", 10‴: gravimetrische Messvorrichtung
- 12: Waagengrundkörper
- 14, 14', 14", 14‴: Aufsatz
- 16: Wägesystemraum
- 18: Wägeraum
- 20: Waagengrundkörperwandung
- 201: Schnittstellen
- 22: Lastaufnehmer
- 24: Wägegutträger
- 26: Windschutz
- 28: Elektronikeinheit

## Patentansprüche

1. Gravimetrisches Messvorrichtungs-System, umfassend einen Waagengrundkörper, ein Wägesystem und einer Mehrzahl verschiedener Aufsätzen, zum alternativen Aufbau unterschiedlicher gravimetrischer Messvorrichtungen (10, 10', 10", 10‴), die jeweils den Waagengrundkörper (12), das Wägesystem und einen der Aufsätze (14, 14', 14", 14‴) umfassen, wobei dieser Aufsatz (14, 14', 14", 14‴) an einer Waagengrundkörperwandung (20) des Waagengrundkörpers (12) reversibel fixiert ist und das Wägesystem einen die Waagengrundkörperwandung (20) und den Aufsatz (14, 14', 14", 14‴) durchsetzenden Lastaufnehmer (22) aufweist,
und wobei an der Waagengrundkörperwandung (20) eine Mehrzahl von mit einer Waagenelektronik gekoppelten optischen, magnetischen, taktilen, funktechnischen, thermischen, elektrischen und/oder elektronischen Schnittstellen (201) angeordnet sind, von denen wenigstens eine mit einer korrespondierenden Schnittstelle des Aufsatzes (14, 14', 14", 14‴) zur Ausbildung einer optischen, magnetischen, taktilen, funktechnischen, thermischen, elektrischen bzw. elektronischen Verbindung zwischen dem Aufsatz (14, 14', 14", 14‴) und der Waagenelektronik verbunden ist, während andere nicht von korrespondierenden Schnittstelle des Aufsatzes (14, 14', 14", 14‴) kontaktiert sind.

2. Gravimetrisches Messvorrichtungs-System nach Anspruch 1,
**dadurch gekennzeichnet,**
**dass** wenigstens eine der Schnittstellen (201) an der Waagengrundkörperwandung (20) als Stecker oder als Buchse und die korrespondierende Schnittstelle des Aufsatzes (14, 14', 14", 14‴) entsprechend als Buchse oder als Stecker ausgebildet ist.

3. Gravimetrisches Messvorrichtungs-System nach einem der vorangehenden Ansprüche,
**dadurch gekennzeichnet,**
**dass** wenigstens eine der Schnittstellen (201) an der Waagengrundkörperwandung (20) ebenso wie die korrespondierende Schnittstelle des Aufsatzes (14, 14', 14", 14‴) als Kontaktplatten ausgebildet sind, die bei Ausbildung einer Verbindung mit ihren Flächen aneinander liegen.

4. Gravimetrisches Messvorrichtungs-System nach Anspruch 3,
**dadurch gekennzeichnet,**
**dass** die als Kontaktplatte ausgebildete Schnittstelle (201) an der Waagengrundkörperwandung (20) und die als Kontaktplatte ausgebildete Schnittstelle am Aufsatz (14, 14', 14", 14‴) bei Ausbildung einer Verbindung gegeneinander federbelastet sind.

5. Gravimetrisches Messvorrichtungs-System nach einem der vorangehenden Ansprüche,
**dadurch gekennzeichnet,**
**dass** wenigstens eine Schnittstelle (201) an der Waagengrundkörperwandung (20) als eine Informationssende- und/oder Informationsempfangsschnittstelle ausgebildet ist.

6. Gravimetrisches Messvorrichtungs-System nach einem der vorangehenden Ansprüche,
**dadurch gekennzeichnet,**
**dass** wenigstens eine Schnittstelle (201) an der Waagengrundkörperwandung (20) als eine Energieversorgungsschnittstelle ausgebildet ist.

7. Gravimetrisches Messvorrichtungs-System nach einem der vorangehenden Ansprüche,
**dadurch gekennzeichnet,**
**dass** der Aufsatz (14, 14', 14", 14‴) mittels einer lösbaren Rastverbindung reversibel an der Waagengrundkörperwandung (20) fixiert ist.

## Claims

1. Gravimetric measuring device system, comprising a balance base body, a weighing system, and a plurality of different top units for alternatively constructing different gravimetric measuring devices (10, 10', 10'', 10‴) which each comprise the balance base body (12), the weighing system and one of the top units (14, 14', 14'', 14‴), wherein this top unit (14, 14', 14", 14‴) is reversibly fixed on a balance base body wall (20) of the balance base body (12), and the weighing system has a load receptor (22) which passes through the balance base body wall (20) and the top unit (14, 14', 14'', 14‴), and wherein a plurality of optical, magnetic, tactile, radio, thermal, electrical and/or electronic interfaces (201) coupled to a balance electronics are arranged on the balance base body wall (20), at least one of which interfaces is connected to a corresponding interface of the top unit (14, 14', 14'', 14‴) to form an optical, magnetic, tactile, radio, thermal, electrical and/or electronic connection between the top unit (14, 14', 14", 14‴) and the balance electronics, while other interfaces are not contacted by corresponding interfaces of the top unit (14, 14', 14'', 14‴).

2. Gravimetric measuring device system according to claim 1,
**characterized in that**
at least one of the interfaces (201) on the balance base body wall (20) is configured as a plug or as a socket, and the corresponding interface of the top unit (14, 14', 14'', 14‴) is accordingly configured as a socket or as a plug.

3. Gravimetric measuring device system according to any one of the preceding claims,
**characterized in that**
at least one of the interfaces (201) on the balance base body wall (20) and also the corresponding interface of the top unit (14, 14', 14'', 14''') are configured as contact plates which bear with their surfaces against each other when a connection is formed.

4. Gravimetric measuring device system according to claim 3,
**characterized in that**
the interface (201) configured as a contact plate on the balance base body wall (20) and the interface configured as a contact plate on the top unit (14, 14', 14'', 14‴) are springloaded towards each other when a connection is formed.

5. Gravimetric measuring device system according to any one of the preceding claims,
**characterized in that**
at least one interface (201) on the balance base body wall (20) is configured as an information-transmitting and/or information-receiving interface.

6. Gravimetric measuring device system according to any one of the preceding claims,
**characterized in that**
at least one interface (201) on the balance base body wall (20) is configured as a power supply interface.

7. Gravimetric measuring device system according to any one of the preceding claims,
**characterized in that**
the top unit (14, 14', 14'', 14‴) is reversibly fixed to the balance base body wall (20) by way of a detachable snap-in connection.

## Revendications

1. Système de dispositif de mesure gravimétrique, comprenant un corps de base de balance, un système de pesée et une pluralité de diverses rehausses, pour la construction alternative de différents dispositifs de mesure (10, 10', 10", 10‴) gravimétriques qui comprennent respectivement le corps de base de balance (12), le système de pesée et l'une des rehausses (14, 14', 14", 14‴), dans lequel cette rehausse (14, 14', 14'', 14‴) est fixée de façon réversible contre une paroi de corps de base de balance (20) du corps de base de balance (12) et le système de pesée présente un récepteur de charge (22) traversant la paroi de corps de base de balance (20) et la rehausse (14, 14', 14'', 14‴), et dans lequel une pluralité d'interfaces (201) optiques, magnétiques, tactiles, radiotechniques, thermiques, électriques et/ou électroniques couplées à une électronique de balance sont agencées contre la paroi de corps de base de balance (20), dont au moins l'une des interfaces est reliée à une interface correspondante de la rehausse (14, 14', 14'', 14''') pour la formation d'une liaison optique, magnétique, tactile, radiotechnique, thermique, électrique et/ou électronique entre la rehausse (14, 14', 14", 14‴) et l'électronique de balance pendant que d'autres interfaces ne sont pas en contact avec des interfaces correspondantes de la rehausse (14, 14', 14", 14‴).

2. Système de dispositif de mesure gravimétrique selon la revendication 1,
**caractérisé en ce que**
au moins l'une des interfaces (201) contre la paroi de corps de base de balance (20) est conçue en tant que prise ou en tant que douille et l'interface correspondante de la rehausse (14, 14', 14", 14‴) est conçue de façon correspondante en tant que prise ou en tant que douille.

3. Système de dispositif de mesure gravimétrique selon l'une des revendications précédentes,
**caractérisé en ce que**
au moins l'une des interfaces (201) contre la paroi de corps de base de balance (20) de même que l'interface correspondante de la rehausse (14, 14', 14", 14''') sont conçues en tant que plaques de contact qui se situent l'une à côté de l'autre avec leurs surfaces lors de la formation d'une liaison.

4. Système de dispositif de mesure gravimétrique selon la revendication 3,
**caractérisé en ce que**
l'interface (201) conçue en tant que plaque de contact contre la paroi de corps de base de balance (20) et l'interface (201) conçue en tant que plaque de contact contre la rehausse (14, 14', 14", 14''') sont sollicitées par ressort lors de la formation d'une liaison.

5. Système de dispositif de mesure gravimétrique selon l'une des revendications précédentes,
**caractérisé en ce que**
au moins une interface (201) contre la paroi de corps de base de balance (20) est conçue en tant qu'interface d'émission d'information et/ou de réception d'information.

6. Système de dispositif de mesure gravimétrique selon l'une des revendications précédentes,
**caractérisé en ce que**
au moins une interface (201) contre la paroi de corps de base de balance (20) est conçue en tant qu'interface d'alimentation en énergie.

7. Système de dispositif de mesure gravimétrique selon l'une des revendications précédentes,
**caractérisé en ce que**
la rehausse (14, 14', 14'', 14''') est fixée de façon réversible contre la paroi de corps de base de balance (20) au moyen d'une liaison par encliquetage amovible.
